# EUROPEAN PATENT APPLICATION

(11) **EP 4 481 620 A1**
(43) Date of publication of application: **25.12.2024**
(21) Application number: 22926080.7
(22) Date of filing: 08.12.2022
(51) Int. Cl.: G06K 7/10

(54) **SEARCH DEVICE AND PROGRAM RECORDING MEDIUM**

(30) Priority: 14.02.2022 JP 2022020732
(71) Applicant: Toshiba TEC Kabushiki Kaisha, Tokyo 141-8562 (JP)
(72) Inventor: SATO, Maki, Tokyo 141-8562 (JP); OKUMA, Yumiko, Tokyo 141-8562 (JP); YAGINUMA, Jun, Tokyo 141-8562 (JP); KATSURADA, Ran, Tokyo 141-8562 (JP); YANASE, Yohei, Tokyo 141-8562 (JP)
(74) Representative: Bandpay & Greuter
(86) International application number: PCT/JP2022/045361
(87) International publication number: WO 2023/153066

(57) **Abstract**

According to an embodiment, a search device includes an antenna having directivity, a communication unit, a determination unit, an imaging unit, and a display unit. The communication unit that wirelessly communicates with a search-target wireless tag using the antenna. The determination unit is configured to determine a relative position of the wireless tag with respect to the antenna based on a state of communication between the communication unit and the search-target wireless tag. The imaging unit that obtains an image of an imaging range defined as a direction of orientation of the antenna. The display unit is configured to display a screen on which a guide image for bringing the antenna close to the position determined by the determination unit is superimposed on the image obtained by the imaging unit.

## Description

### FIELD

Embodiments described herein relate generally to a search device and a program recording medium.

### BACKGROUND

A search device has already been known that determines the position of a wireless tag as a search target based on the status of a communication with the wireless tag and notifies a user of the position.

However, a conventional search device is designed to notify a user of a position of a wireless tag by displaying a position relative to the search device on a two-dimensional plane, and this way of displaying the position often makes it difficult for the user to efficiently reach the position of the wireless tag.

In view of such circumstances, it has been desired to enable a user to easily reach the position of a wireless tag that the user is searching for.

### CITATION LIST

PATENT LITERATURE 1: Jpn. Pat. Appln. KOKAI Publication No. 2015-33033

### SUMMARY

An object of the present invention is to provide a search device and a program recording medium that enables a user to easily reach the position of a wireless tag that the user is searching for.

### BRIEF DESCRIPTION OF THE DRAWINGS

FIG. 1 is a block diagram showing a circuit configuration of a main part of a search device according to an embodiment.
FIG. 2 is a flowchart of a search process by a processor shown in FIG. 1.
FIG. 3 is a flowchart of a search process by a processor shown in FIG. 1.
FIG. 4 is a diagram showing a first guide screen as an example.
FIG. 5 is a diagram showing an example of a second guide screen.
FIG. 6 is a diagram showing an example of a detection screen.
FIG. 7 is a flowchart of a display process by the processor in FIG. 1.
FIG. 8 is a diagram showing a third guide screen as an example.
FIG. 9 is a diagram showing a fourth guide screen as an example.
FIG. 10 is a diagram showing a fifth guide screen as an example.
FIG. 11 is a diagram showing a seventh guide screen as an example.
FIG. 12 is a diagram showing a ninth guide screen as an example.
FIG. 13 is a diagram showing an example of a display screen in a third guide display.
FIG. 14 is a diagram showing a display screen as another example of a first guide display.

### DETAILED DESCRIPTION

According to an embodiment, a search device includes an antenna having directivity, a communication unit, a determination unit, an imaging unit, and a display unit. The communication unit that wirelessly communicates with a search-target wireless tag using the antenna. The determination unit is configured to determine a relative position of the wireless tag with respect to the antenna based on a state of communication between the communication unit and the search-target wireless tag. The imaging unit that obtains an image of an imaging range defined as a direction of orientation of the antenna. The display unit is configured to display a screen on which a guide image for bringing the antenna close to the position determined by the determination unit is superimposed on the image obtained by the imaging unit.

Hereinafter, an example of an embodiment will be described with reference to the drawings.

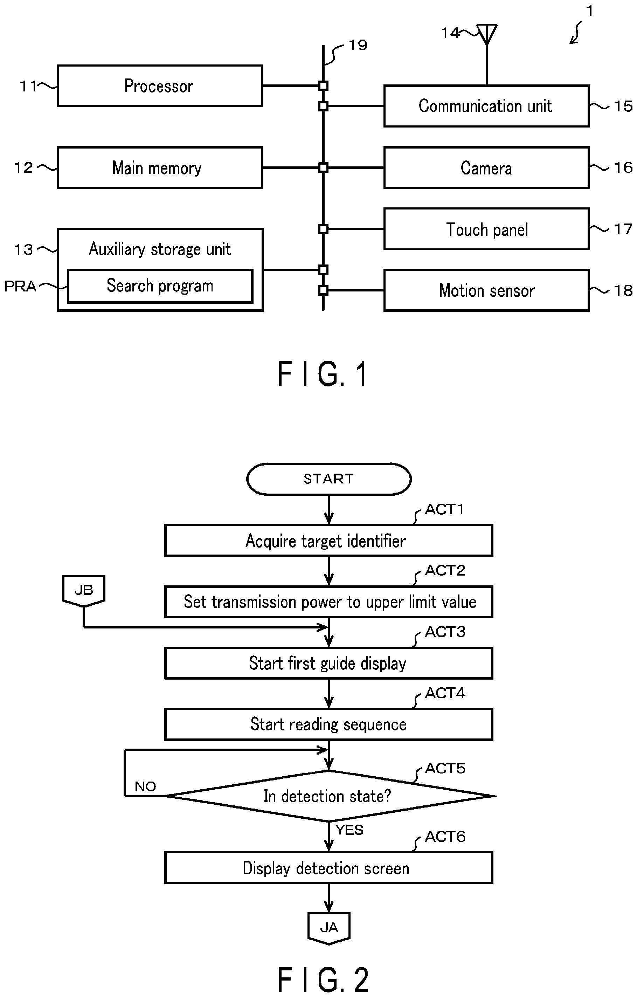

FIG. 1 is a block diagram showing a circuit configuration of a main part of a search device 1 according to the present embodiment.

The search device 1 is realized by a device that can be moved by a user. For example, the search device 1 includes a grip and is used in a handheld state in which the grip is gripped by a user. Hereinafter, a state in which the user holds the search device 1 in a predetermined state is referred to as a "use state". The search device 1 guides the user so as to bring the search device 1 close to the wireless tag, thereby assisting the user to reach the position of, for example, an article to which a wireless tag is attached.

The search device 1 includes a processor 11, a main memory 12, an auxiliary storage unit 13, an antenna 14, a communication unit 15, a camera 16, a touch panel 17, a motion sensor 18, a transmission path 19, etc. The processor 11, the main memory 12, the auxiliary storage unit 13, the antenna 14, the communication unit 15, the camera 16, the touch panel 17, and the motion sensor 18 are connected via a transmission path 19.

Connected by the transmission path 19, the processor 11, the main memory 12, and the auxiliary storage unit 13 constitute a computer that performs information processing for controlling the search device 1. The processor 11 corresponds to a central part of the computer. The processor 11 performs information processing for controlling each unit to realize the various functions of the search device 1 in accordance with an operating system and an information processing program such as an application program. The processor 11 may be a processing circuit, such as a central processing unit (CPU), a graphics processing unit (GPU), an application specific integrated circuit (ASIC), a programmable logic device (for example, a simple programmable logic device (SPLD), a complex programmable logic device (CPLD), or a field programmable gate array (FPGA)). The processor 11 is not limited to a case where the processor 11 is configured as a single processing circuit; the processor 11 may be configured by combining a plurality of processing circuits.

The main memory 12 corresponds to a main storage portion of the computer. The main memory 12 includes a read-only memory area and a rewritable memory area. The main memory 12 stores a part of the information processing program in the read-only memory area. The main memory 12 may store data necessary for the processor 11 to execute processing for controlling each unit in a read-only memory area or a rewritable memory area. The main memory 12 uses a rewritable memory area as a work area for the processor 11.

The auxiliary storage unit 13 corresponds to an auxiliary storage portion of the computer. As the auxiliary storage unit 13, for example, an EEPROM (electric erasable programmable read-only memory) is used. As the auxiliary storage unit 13, a hard disc drive (HDD), a solid state drive (SSD), or other various known storage devices may be used. The auxiliary storage unit 13 stores data used by the processor 11 to perform various types of processing and data generated by the processing performed by the processor 11. The auxiliary storage unit 13 may store the information processing program. In the present embodiment, the auxiliary storage unit 13 stores a search program PRA, which is one of the information processing programs.

The antenna 14 emits radio waves corresponding to the electric signal supplied from the communication unit 15 into the space. The antenna 14 receives radio waves emitted from the wireless tag into the space and arriving at the antenna 14, and outputs an electric signal corresponding to the received radio waves to the communication unit 15. The antenna 14 has directivity. The antenna 14 is provided in such a manner that the directivity range faces the front of the user when the search device 1 is in the use state. In the following description, as an example, the direction of the central axis of the directivity range of the antenna 14 is defined as the orientation of the search device 1.

The communication unit 15 performs wireless communication with the wireless tag via the antenna 14 in accordance with a predetermined sequence. The communication unit 15 can change the transmission power.

The camera 16 includes an optical system and an image sensor, and generates image data representing an image within an angle of view formed by the optical system by the image sensor. The camera 16 is preferably capable of capturing a moving image. However, the camera 16 may capture still images individually or in succession. The central axis of the angle of view of the camera 16 is set to face the front of the user when the search device 1 is in the use state. The camera 16 is an example of an imaging unit.

The touch panel 17 functions as an input device and a display device of the search device 1.

The motion sensor 18 detects a motion of the search device 1. The motion sensor 18 determines the orientation of the search device 1 as the orientation in the three-dimensional space based on the movement of the search device 1. As the motion sensor 18, for example, a well-known sensor such as an acceleration sensor can be used.

The transmission path 19 includes an address bus, a data bus, and a control signal line, etc., and transmits data and control signals received and transmitted between the connected units. Note that a wireless transmission path such as Bluetooth (registered trademark) may be used as a part of the transmission path 19.

The search device 1 is configured to include, for example, a first unit and a second unit which are separate bodies configured to be attachable to and detachable from each other. The housing of the first unit is formed in part as the grip. The first unit includes, for example, the antenna 14, the communication unit 15, the camera 16, and a part of the transmission path 19. The second unit includes, for example, the processor 11, the main memory 12, the auxiliary storage unit 13, the touch panel 17, the motion sensor 18, and the transmission path 19. Note that, as the second unit, for example, an information processing device, such as a smartphone or a tablet device, can be used as it is. It is preferable to use the wireless transmission path for data transmission between the first unit and the second unit. It can be discretionarily decided which unit the respective elements are provided in; for example, the camera 16 can be provided in the second unit and the motion sensor 18 can be provided in the first unit. The search device 1 may be constituted by a single unit or three or more units.

The search device 1 is transferred, with the search program PRA being stored in the auxiliary storage unit 13. Alternatively, the hardware of the search device 1 may be transferred in a state in which the search program PRA is not stored in the auxiliary storage unit 13 or in a state in which another information processing program of the same type as the search program PRA is stored in the auxiliary storage unit 13. In this case, the search program PRA is written in the auxiliary storage unit 13 by the processor 11, for example, under an instruction from the user, for example. The transfer of the search program PRA may be achieved by recording the search program PRA on removable recording media, such as a magnetic disc, a magneto-optical disk, an optical disc, or a semiconductor memory, or via a network.

Next, the operation of the search device 1 configured as described above will be described.

When the search device 1 is in an operation state for searching for a wireless tag, the processor 11 executes information processing (hereinafter, referred to as "search processing") based on the search program PRA.

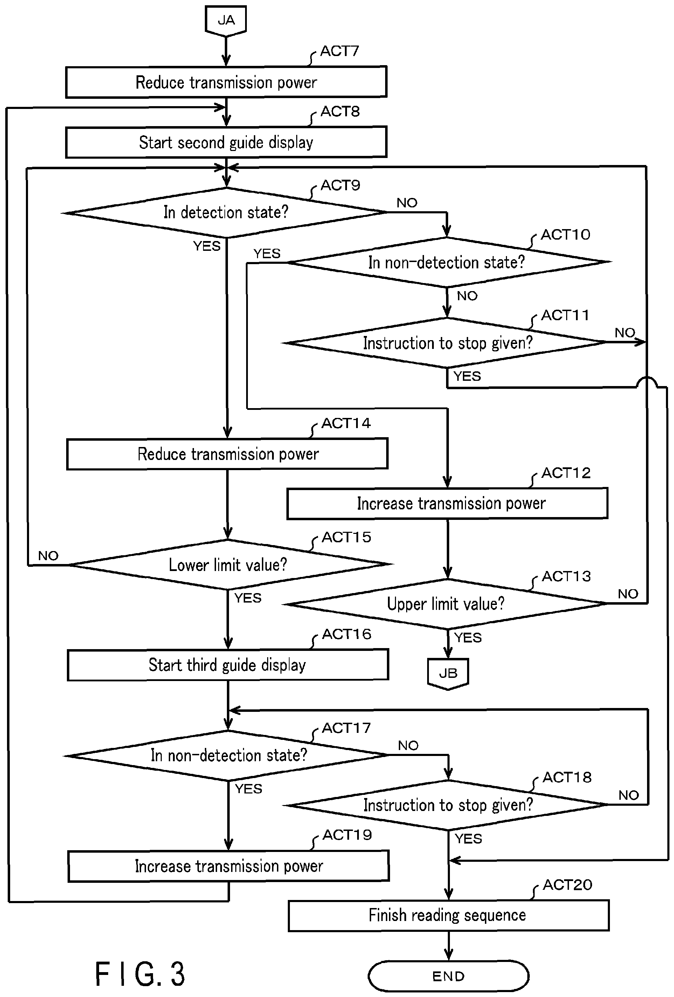

FIGS. 2 and 3 are flowcharts of the search processing by the processor 11. The contents of the processing described below are merely examples, and the order of some of the processing may be changed, some of the processing may be omitted, or other processing may be added as appropriate.

In ACT1 in FIG. 2, the processor 11 acquires an identifier of a search-target wireless tag (hereinafter, referred to as a "target tag") as a target identifier. The processor 11 sets, for example, an identifier designated by a predetermined operation on the touch panel 17 as the target identifier.

In ACT2, the processor 11 sets the transmission power of the communication unit 15 to a predetermined upper limit value. The upper limit value may be fixed by, for example, a designer of the search device 1, or may be discretionarily determined by a user or an administrator of the search device 1.

As ACT3, the processor 11 starts the first guide display. The first guide display is a display for guiding the user to perform an operation for enabling communication between the search device 1 and the target tag. The processor 11, for example, causes a first guide screen for prompting the user to move the search device 1 and a second guide screen for prompting the user to greatly change the direction of the search device 1 to be alternately displayed on the touch panel 17.

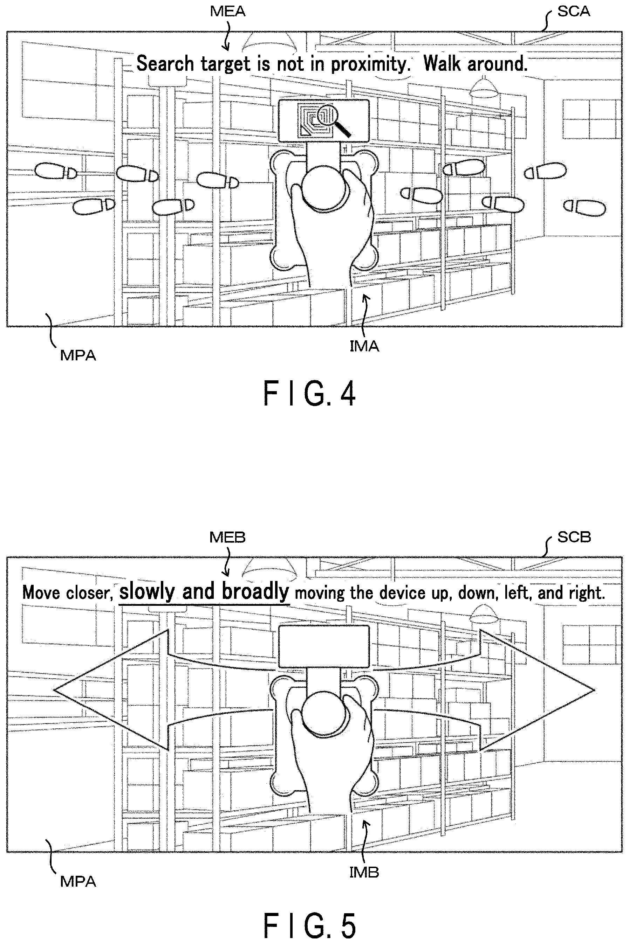

FIG. 4 is a diagram showing a first guide screen SCA as an example.

The first guide screen SCA is a screen that displays an image IMA and a text message MEA for prompting the user to move the search device 1, with the image IMA and the text message MEA being superimposed on the moving image MPA. In the example of FIG. 4, the image IMA and the text message MEA are to prompt the user to move. If the user holding the search device 1 moves, the search device 1 moves; as a consequence, the user is prompted by the image IMA and the text message MEA to move the search device 1.

FIG. 5 is a diagram showing an example of the second guide screen SCB.

The second guide screen SCB is a screen that displays an image IMB and a text message MEB for prompting the user to change the orientation, the image IMB and the text message MEB being superimposed on the moving image MPA.

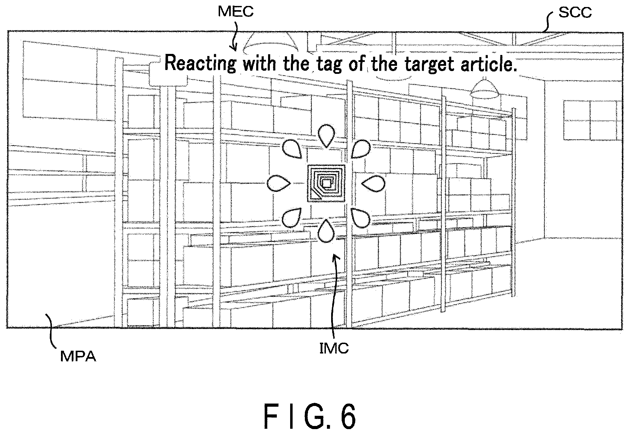

For example, the processor 11 activates the camera 16 and starts displaying on the touch panel 17 the moving image MPA based on the image data that is output by the camera 16. The processor 11 repeats, at predetermined time intervals, a state in which the image IMA and the text message MEA are superimposed on the moving image MPA based on the image data stored in the auxiliary storage unit 13 in advance and a state in which the image IMB and the text message MEB are superimposed on the moving image MPA based on the image data stored in the auxiliary storage unit 13 in advance. Although the moving image MPA has the same contents in FIGS. 4 and 5, it actually changes in various ways. This is also the same in FIGS. 6, 8 to 12, and 14, which will be described below.

In ACT4, the processor 11 causes the communication unit 15 to start a reading sequence for sequentially reading the identifiers of the wireless tags with which communication is possible. As the read sequence, an existing known sequence, such as a sequence conforming to the ISO/IEC 18000 series standard, can be applied. The wireless tag operates by receiving radio waves radiated from the antenna 14 in response to a signal supplied from the communication unit 15, and radiates radio waves including an identifier stored in advance. Thus, the communicable range of the search device 1 with the wireless tag is smaller than the range to which the radio waves from the search device 1 reach. In other words, the communicable range is determined according to the directivity of the antenna 14 and the magnitude of the transmission power of the communication unit 15. Setting the transmission power of the communication unit 15 to the upper limit value as described above corresponds to setting the size of the communicable range to the maximum value of the predetermined variable width. Thus, the search device 1 first attempts to communicate with the target tag in the maximum communicable range of the predetermined variable width.

The user moves while changing the direction of the search device 1 in accordance with the first guide display. When the target tag enters the communicable area of the search device 1, the target identifier can be read by the communication unit 15. However, since the user continues to move while changing the direction of the search device 1, the target tag may exit the communication area of the search device 1.

In ACT5, the processor 11 waits for a state in which the wireless tag identified by the target identifier is detected (hereinafter, referred to as a "detection state"). For example, the processor 11 checks the identifier that is read by the communication unit 15 through performing of the reading sequence, and determines that the state is a detection state when the reading state of the target identifier matches a predetermined condition. For example, the processor 11 determines a state in which the number of times of reading the target identifier within a predetermined period exceeds a predetermined number of times as the detection state. The above conditions may be set in a fixed manner by a designer or the like of the search device 1, or may be set discretionarily by a user, an administrator, or the like of the search device 1. Then, if the processor 11 confirms that the state is the detection state, the processor 11 determines YES and proceeds to ACT6.

In ACT6, the processor 11 displays a detection screen on the touch panel 17. The detection screen is a screen for notifying the user that the search device 1 has entered the detection state, that is, that the target tag has been detected.

Upon display of the detection screen, the first guide display is finished. That is, the processor 11 performs the first guide display in a period until the search device 1 enters the detection state. The processor 11 thereby judges that a situation where the device is in the detection state cannot be confirmed to be a situation where the position of the target tag is outside the communicable range, and displays the first and second guide screens on the touch panel 17, in which the images IMA and IMB, the text messages MEA and MEB, and the like, which are images for guidance for bringing the position of the target tag into the communicable range, are superimposed on the moving image MPA obtained by the camera 16. Thus, the processor 11 executes information processing based on the search program PRA, and thus the computer having the processor 11 as the central part functions as a determination unit and a display control unit. A function as a display control unit realized by a computer having the processor 11 as a central part and a function as a display unit realized by a conjunction with the touch panel 17 serving as a display device are realized.

FIG. 6 is a diagram illustrating the detection screen SCC as an example.

The detection screen SCC is a screen on which an image IMC and a text message MEC for notifying the user that the target tag has been detected are displayed, with the image IMC and the text message MEC being superimposed on the moving image MPA. For example, the processor 11 superimposes the image IMC and the text message MEC on the moving image MPA based on the image data stored in the auxiliary storage unit 13 in advance, while continuing the display of the moving image MPA. By viewing the detection screen SCC, the user can recognize that the user has approached the target tag to some extent.

In ACT7 shown in FIG. 3, the processor 11 reduces the transmission power of the communication unit 15. For example, the processor 11 changes the setting value of the transmission power of the communication unit 15 to a value obtained by subtracting a predetermined decrease value from the current value. The decrease value may be set to a fixed value by a designer or the like of the search device 1, or may be discretionarily set by a user, an administrator, or the like of the search device 1. As an example, the decrease value is assumed to be a value obtained by dividing a difference between an upper limit value and a lower limit value of the transmission power that is set by the user or the administrator by the number of steps that is predetermined as a fixed value. By decreasing the transmission power in such a manner, the communicable area of the search device 1 is reduced, and the detection state cannot be maintained unless the user moves the search device 1 to further approach the target tag.

In ACT8, the processor 11 starts, for example, the second guide display. The second guide display is a display for guiding the user to bring the search device 1 further closer to the target tag.

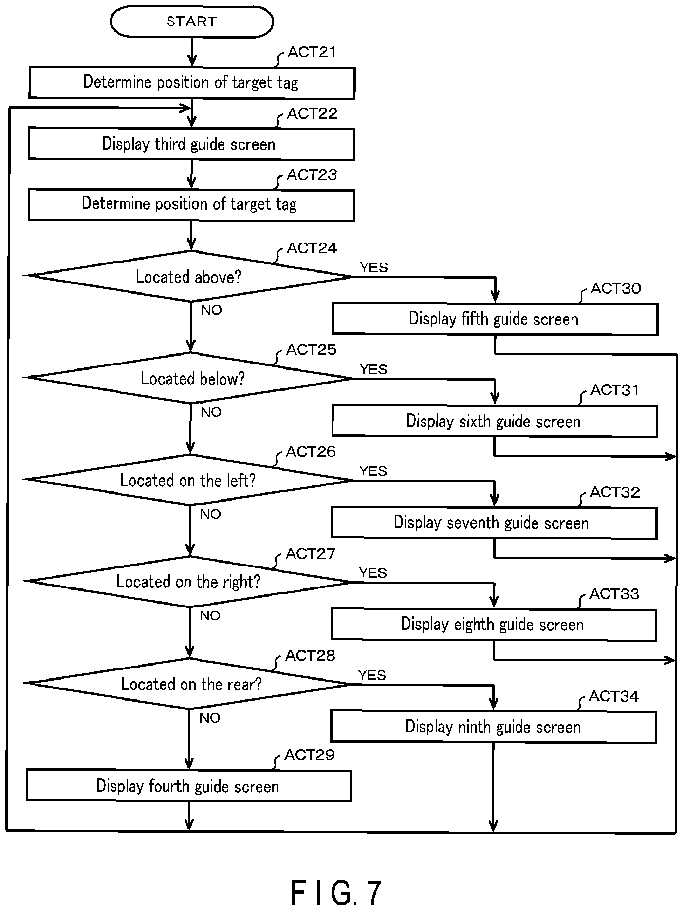

FIG. 7 is a flowchart of information processing (hereinafter, referred to as display processing) by the processor 11 for the second guide display.

The processor 11 executes the display processing in parallel with the search processing, in accordance with the search program PRA. The information processing program for the search processing and the information processing program for the display processing may be separate application programs.

In ACT21, the processor 11 determines the position of the target tag. The processor 11 determines, for example, the position of the target tag as the relative position of the target tag with respect to the position of the search device 1 based on a situation of immediately preceding multiple acquisitions of the target identifier. More specifically, the processor 11 determines the position of the target tag in consideration of the orientation of the search device 1 in each of the plurality of times of reading of the target identifier, the amount of deviation of the position of the search device 1 in each of the plurality of times of reading of the target identifier, the communication quality with the target tag, or the like. As the processing for the determination, for example, known processing as disclosed in Japanese Patent Application KOKAI Publication No. 2015-33033 can be applied. As an index of the communication quality with the target tag, for example, a receiver signal strength indicator (RSSI) can be used. The RSSI is measured by the communication unit 15 with respect to the radio wave radiated from the target tag, for example. Alternatively, the RSSI measured by the wireless tag with respect to the radio waves radiated from the search device 1 and reported to the search device 1 by the wireless tag may be used. In the latter case, the RSSI reported by the wireless tag is affected by a change in the transmission power of the search device 1, and therefore, it is desirable to correct the influence in consideration of the setting value of the transmission power.

In ACT22, the processor 11 displays a third guide screen on the touch panel 17. The third guide screen is a screen for prompting the user to move the search device 1 while slightly changing the direction of the search device 1.

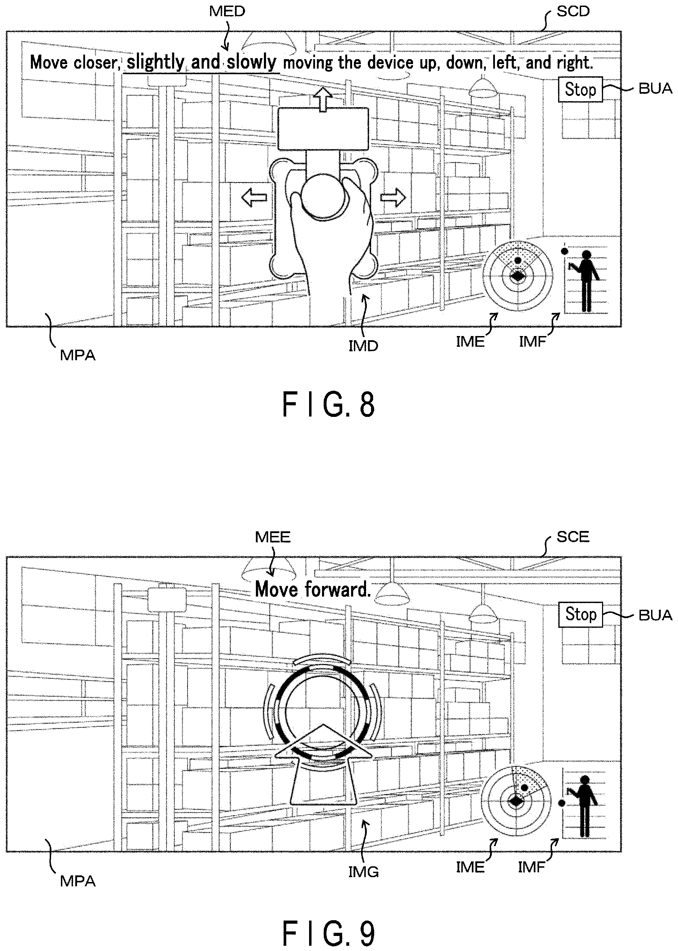

FIG. 8 is a diagram showing a third guide screen SCD as an example.

The third guide screen SCD is a screen that displays an image IMD and a text message MED for prompting the user to move the search device 1 while slightly changing the direction of the search device 1, with the image IMD and the text message MED being superimposed on the moving image MPA. The third guide screen SCD displays a button BUA, an image IME, and an image IMF. The button BUA is a soft key for the user to instruct the stopping of the search. The image IME is an image representing by a radar chart a relative positional relationship of the target tag in the horizontal direction with respect to the search device 1. The image IMF is an image representing a relative positional relationship of the target tag in the vertical direction with respect to the search device 1. For example, the processor 11 displays the image IMD, the text message MED, and the button BUA on the moving image MPA in a superimposed manner based on the image data stored in the auxiliary storage unit 13 in advance while continuing the display of the moving image MPA, and displays the images IME and IMF generated to represent the positional relationship between the target tags on the moving image MPA in a superimposed manner. If the vehicle proceeds from ACT21 to ACT22, the processor 11 reflects the determination result in ACT21 on the images IME and IMF.

In ACT23, the processor 11 determines the position of the target tag again. For example, the processor 11 waits for a new target identifier to be acquired a plurality of times, and determines the position of the target tag in the same manner as in ACT21 based on the situation where the multiple target identifiers are acquired. At this time, if the user changes the position and orientation of the search device 1, a new position of the target tag corresponding to such an operation situation is determined.

In ACT24, the processor 11 confirms whether or not the position of the target tag is above the search device 1. Then, if the processor 11 cannot confirm the event, the processor 11 determines NO, and proceeds to ACT25.

In ACT25, the processor 11 confirms whether or not the position of the target tag is below the search device 1. Then, if the processor 11 cannot confirm the event, the processor 11 determines NO, and proceeds to ACT26.

In ACT26, the processor 11 confirms whether or not the position of the target tag is on the left side of the search device 1. Then, if the processor 11 cannot confirm the event, the processor 11 determines NO, and proceeds to ACT27.

In ACT27, the processor 11 confirms whether or not the position of the target tag is on the right side of the search device 1. Then, if the processor 11 cannot confirm the event, the processor 11 determines NO, and proceeds to ACT28.

In ACT28, the processor 11 confirms whether or not the position of the target tag is behind the search device 1.

In order for the processor 11 to carry out the confirmation in ACT24 through ACT28, an intermediate range, an upper range, and a lower range, which are obtained by vertically dividing the three-dimensional space into three ranges, and a front range, a left range, a right range, and a rear range, which are obtained by horizontally dividing the three-dimensional space into four ranges, are determined in advance with reference to the current position of the search device 1. As an example, the intermediate range is defined as a range that spreads at a specified angle including the horizontal direction with reference to the current position of the search device 1 as a base point. The upper range and the lower range are defined as ranges above and below the intermediate range. As an example, the front range is defined as a range that spreads at a specified angle including the current direction of the search device 1 in a horizontal plane with reference to the current position of the search device 1 as a base point. The left range and the right range are defined as ranges that are adjacent to the left side and the right side of the front range in the horizontal plane and that extend at a specified angle with reference to the current position of the search device 1 as a base point. The rear range is defined as a range different from the front range, the left range, and the right range in the horizontal plane with reference to the current position of the search device 1 as a base point. The above-described specified angles relating to the front range, the left range, the right range, and the rear range are all assumed to be 90 degrees, for example. However, for example, the prescribed angle for each of the front range, the left range, and the right range may be set to 60 degrees, and the prescribed angle for the rear range may be set to 180 degrees. The middle range, the upper range, the lower range, the front range, the left range, the right range, and the rear range may be discretionarily set by a designer of the search device 1, a user, or the like.

If the event cannot be confirmed in all of ACT24 through ACT28, the processor 11 determines NO in ACT28, and proceeds to ACT29. In other words, the processor 11 proceeds to ACT29 if the position of the target tag is within the intermediate range and within the front range.

In ACT29, the processor 11 displays a fourth guide screen on the touch panel 17. The fourth guide screen is a screen for guiding the user to move forward in order to approach the target tag.

FIG. 9 is a diagram showing a fourth guide screen SCE as an example.

The fourth guide screen SCE is a screen showing an image IMG and a text message MEE both indicating that the user should move forward, which are superimposed on the moving image MPA. The fourth guide screen SCE displays the button BUA, the image IME, and the image IMF in the same manner as the third guide screen SCD. For example, the processor 11 displays the image IMG, the text message MEE, and the button BUA, superimposing these items on the moving image MPA, based on the image data stored in the auxiliary storage unit 13 in advance, while continuing the display of the moving image MPA, and displays the images IME and IMF similarly to the third guide screen SCD. However, the processor 11 reflects the determination result in ACT23 on the images IME and IMF.

Then, if the processor 11 finishes displaying the fourth guide screen for a predetermined display period, the processor 11 returns to ACT22. If the processor 11 returns to ACT22 from a place other than ACT21, the processor 11 reflects the determination result in ACT23 on the images IME and IMF.

If the processor 11 confirms that the tag position newly determined in ACT23 is within the upper range, the processor 11 determines YES in ACT24 and proceeds to ACT30.

In ACT30, the processor 11 displays a fifth guide screen on the touch panel 17. The fifth guide screen is a screen for informing the user that the target tag is located on the upper side with respect to the current direction of the search device 1.

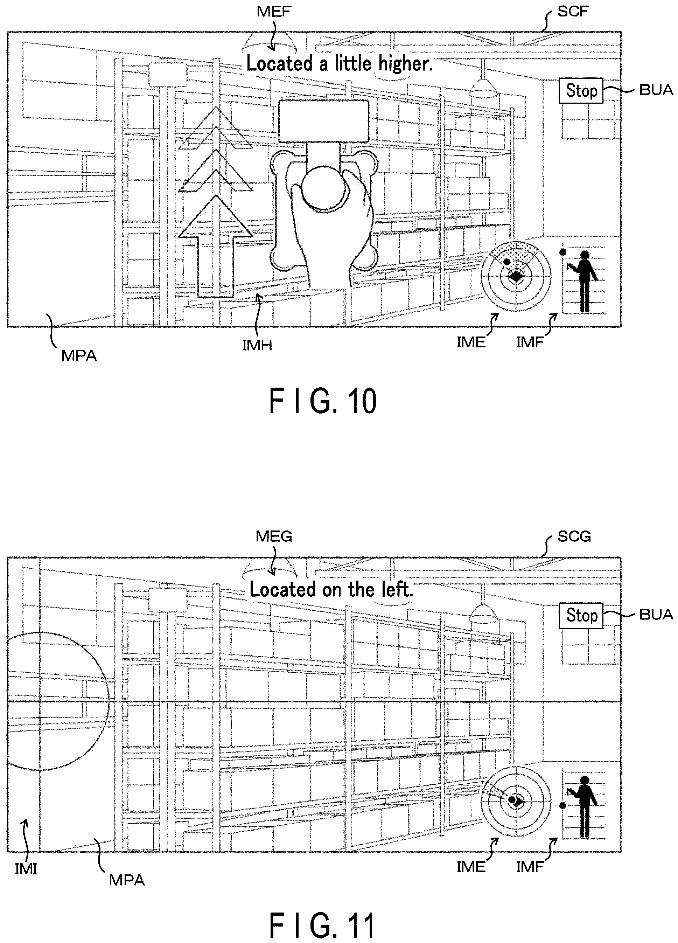

FIG. 10 is a diagram showing a fifth guide screen SCF as an example.

The fifth guide screen SCF is a screen showing an image IMH and a text message MEF for informing the user that the target tag is located on the upper side with respect to the current direction of the search device 1, with the image IMH and the text message MEF being superimposed on the moving image MPA. The fifth guide screen SCF displays the button BUA, the image IME, and the image IMF in the same manner as the fourth guide screen SCE. For example, the processor 11 displays the image IMH, the text message MEF, and the button BUA, superimposing these items on the moving image MPA, based on the image data stored in the auxiliary storage unit 13 in advance, while continuing the display of the moving image MPA, and displays the images IME and IMF similarly to the fourth guide screen SCE.

Then, if the processor 11 finishes displaying the fifth guide screen for a predetermined display period, the processor 11 returns to ACT22.

If the processor 11 confirms that the tag position newly determined in ACT23 is within the lower range, the processor 11 determines YES in ACT25 and proceeds to ACT31.

In ACT31, the processor 11 displays a sixth guide screen on the touch panel 17. The sixth guide screen is a screen for informing the user that the target tag is located on the lower side with respect to the lower direction of the search device 1.

As an example, the sixth guide screen is a screen in which the image IMG in the fifth guide screen SCF is replaced with an image with a reversed arrow and a text message MEF is replaced with a text message, such as "the target is located a little lower".

Then, if the processor 11 finishes displaying the sixth guide screen for a predetermined display period, the processor 11 returns to ACT22.

If the processor 11 confirms that the tag position newly determined in ACT23 is within the left-side range, the processor 11 determines YES in ACT26 and proceeds to ACT32.

In ACT32, the processor 11 displays a seventh guide screen on the touch panel 17. The seventh guide screen is a screen for informing the user that the target tag is located on the left side with respect to left direction of the search device 1.

Then, if the processor 11 finishes displaying the seventh guide screen for a predetermined display period, the processor 11 returns to ACT22.

FIG. 11 is a diagram showing a seventh guide screen SCG as an example.

The seventh guide screen SCG is a screen showing an image IMI and a text message MEG for informing the user that the target tag is located on the left side with respect to the current direction of the search device 1, with the image IMI and the text message MEG being superimposed on the moving image MPA. The seventh guide screen SCG displays the button BUA, the image IME, and the image IMF in the same manner as the fourth guide screen SCE. For example, the processor 11 displays the image IMI, the text message MEG, and the button BUA, superimposing these items on the moving image MPA, based on the image data stored in the auxiliary storage unit 13 in advance, while continuing the display of the moving image MPA, and displays the images IME and IMF similarly to the fourth guide screen SCE.

Then, if the processor 11 finishes displaying the seventh guide screen for a predetermined display period, the processor 11 returns to ACT22.

If the processor 11 confirms that the tag position newly determined in ACT23 is within the right-side range, the processor 11 determines YES in ACT27 and proceeds to ACT33.

In ACT33, the processor 11 displays an eighth guide screen on the touch panel 17. The eighth guide screen is a screen for informing the user that the target tag is located on the right side with respect to right direction of the search device 1.

As an example, the eighth guide screen replaces the image IMI in the seventh guide screen SCG with an image in which the positions of the circle and the vertical line included in the image IMI are positioned at the right end of the moving image MPA, and replaces the image IMI with a text message MEG "The search target is on the right", for example.

Then, if the processor 11 finishes displaying the eighth guide screen for a predetermined display period, the processor 11 returns to ACT22.

If the processor 11 confirms that the tag position newly determined in ACT23 is within the aforementioned rear range, the processor 11 determines YES in ACT28 and proceeds to ACT34.

In ACT34, the processor 11 displays a ninth guide screen on the touch panel 17. The ninth guide screen is a screen for informing the user that the target tag is located on the rear side with respect to right direction of the search device 1.

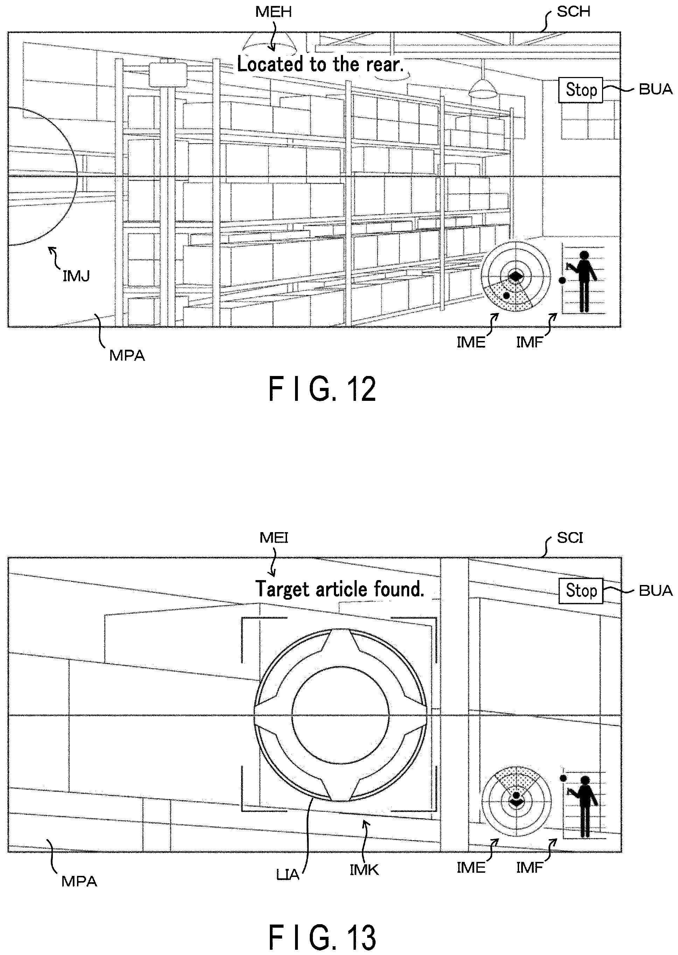

FIG. 12 is a diagram showing a ninth guide screen SCH as an example.

The ninth guide screen SCH is a screen showing an image IMJ and a text message MEH for informing the user that the target tag is located on the rear side with respect to the current direction of the search device 1, with the image IMJ and the text message MEH being superimposed on the moving image MPA. The ninth guide screen SCH displays the button BUA, the image IME, and the image IMF in the same manner as the fourth guide screen SCE. For example, the processor 11 displays the image IMJ, the text message MEH, and the button BUA, superimposing these items on the moving image MPA, based on the image data stored in the auxiliary storage unit 13 in advance, while continuing the display of the moving image MPA, and displays the images IME and IMF similarly to the fourth guide screen SCE.

Then, if the processor 11 finishes displaying the ninth guide screen for a predetermined display period, the processor 11 returns to ACT22.

The display periods of the fourth to ninth guide screens are determined as, for example, periods until a predetermined time elapses after the display starts. Alternatively, the display period is determined as, for example, a period until a predetermined region in the screen is tapped. The display period may be arbitrarily set by a designer of the search device 1, a user, or the like.

If the processor 11 starts the second guide display in ACT8 shown in FIG. 3, the processor 11 proceeds to ACT9.

In ACT9, the processor 11 confirms whether or not the state is the detection state. Then, if the processor 11 cannot confirm the event, the processor 11 determines NO, and proceeds to ACT10.

In ACT10, the processor 11 confirms whether or not the state is a non-detection state. Then, if the processor 11 cannot confirm the event, the processor 11 determines NO, and proceeds to ACT11.

In ACT11, the processor 11 confirms whether or not an instruction to stop the search has been given. Then, if the processor 11 cannot confirm the event, the processor 11 determines NO and returns to ACT9.

Thus, in ACT9 to ACT11, the processor 11 waits for a situation in which the processor 11 can confirm that the state is the detection state or the non-detection state or an issuance of a stopping instruction.

If the user directs the search device 1 in a direction greatly different from the direction in which the target tag is present, or if the user moves the search device 1 in a direction away from the target tag, the target tag may be out of the communicable range of the search device 1, and the target identifier may not be read. Then, the processor 11 determines that the state is a non-detection state when the reading state of the target identifier matches a predetermined condition. As an example, the processor 11 sets a state in which the number of consecutive failures in reading in the repetition of the reading sequence exceeds a preset number of times as the non-detection state. The above conditions may be set in a fixed manner by a designer or the like of the search device 1, or may be set discretionarily by a user, an administrator, or the like of the search device 1. Then, if the processor 11 confirms that the state is the non-detection state, the processor 11 determines YES in ACT10 and proceeds to ACT12.

In ACT12, the processor 11 increases the transmission power of the communication unit 15. For example, the processor 11 changes the setting value of the transmission power of the communication unit 15 to match a value obtained by summing a predetermined increase value from the current value. However, the processor 11 suppresses the changed setting value to be equal to or less than the upper limit value. The increase value may be fixedly set by a designer or the like of the search device 1, or may be discretionarily set by a user, an administrator, or the like of the search device 1. As an example, the increase value is assumed to be a value obtained by dividing a difference between an upper limit value and a lower limit value of the transmission power that is set by the user or the administrator by the number of steps that is predetermined as a fixed value. That is, the increase value is assumed to be the same value as the decrease value, for example. However, the decrease value and the increase value may be set to different values. Thus, the communicable area of the search device 1 is expanded, and the search device 1 is brought into a state where the target tag is easily detected again.

In ACT13, the processor 11 checks whether or not the increased transmission power is the upper limit value. Then, if the increased transmission power does not reach the upper limit value, the processor 11 determines NO, and returns to the standby state of ACT9 to ACT11. Thus, if the transmission output does not reach the upper limit value even when the transmission output is increased, the second guide display is continued. However, if the increased transmission power is the upper limit value, the processor 11 determines YES in ACT13, returns to ACT3 in FIG. 2, and repeats the subsequent steps in the same manner as described above. That is, the operation state of the search device 1 is returned to the initial state of the search.

On the other hand, when the processor 11 is in the standby state in ACT9 to ACT11 in FIG. 3, if the processor 11 can confirm again that the state in which the target identifier can be continuously received continues and the state is the detection state, the processor 11 determines YES in ACT9 and proceeds to ACT14.

In ACT14, similarly in ACT7, the processor 11 reduces the transmission power of the communication unit 15. However, the processor 11 suppresses the changed setting value to be equal to or less than the lower limit value. The lower limit value may be fixed by, for example, a designer of the search device 1 or may be discretionarily determined by a user, etc. of the search device 1.

In ACT15, the processor 11 checks whether or not the decreased transmission power is the lower limit value. Then, if the decreased transmission power does not reach the lower limit value, the processor 11 determines NO, and returns to the standby state of ACT9 to ACT11. Thus, if the transmission output does not reach the lower limit value even when the transmission power is decreased, the second guide display is continued.

As described above, the second guide display is performed, with the transmission power being at an intermediate value within the range between the lower limit value and the upper limit value, excluding the lower limit value and the upper limit value. In the second guide display, the processor 11 determines the position of the target tag based on a communication state. The processor 11 displays the third to ninth guide screens showing the moving image MPA acquire by the camera 16, on the touch panel 17, with the images IMD, IMG, IMH, IMI, and IMJ and the text messages MED, MEE, MEF, MEG, and MEH, and the like, which are images for guidance to bring the search device 1 close to the determined position, being superimposed on the moving image MPA. Thus, the processor 11 executes information processing based on the search program PRA, and thus the computer having the processor 11 as the central part functions as a determination unit and a display control unit. A function as a display control unit realized by a computer having the processor 11 as a central part and a function as a display unit realized by a conjunction with the touch panel 17 serving as a display device are realized.

If the decreased transmission power is the lower limit value, the processor 11 determines YES in ACT15, and proceeds to ACT16.

In ACT16, the processor 11 starts the third guide display. The second guide display is thus finished. The third guide display is a display for guidance that enables the user to specify the position of the target tag. That is, in a situation where the transmission power is decreased to the lower limit value, the target tag is present within a sufficiently narrowed communicable range, and the target tag is supposed to be present in front of the search device 1 and at a position not far away from the search device 1. In this state, the position of the target tag is highly likely to be included in the image captured by the camera 16. Therefore, the third guide display is, for example, a screen indicating that the target tag is present within the range captured by the camera 16.

FIG. 13 is a diagram showing an example of the display screen SCI in the third guide display.

The display screen SCI is a screen that displays an image IMK and a text message MEI for informing the user that the target tag is present at a position included in the moving image MPA, with the image IMK and the text message MEI being superimposed on the moving image MPA. The display screen SCI displays the button BUA, the image IME, and the image IMF in the same manner as the fourth guide screen SCE. For example, the processor 11 displays the image IMK, the text message MEI, and the button BUA, superimposing these items on the moving image MPA, based on the image data stored in the auxiliary storage unit 13 in advance, while continuing the display of the moving image MPA, and displays the images IME and IMF similarly to the fourth guide screen SCE.

In ACT17, the processor 11 confirms whether or not the state is a non-detection state. Then, if the processor 11 cannot confirm the event, the processor 11 determines NO, and proceeds to ACT18.

In ACT18, the processor 11 confirms whether or not an instruction to stop the search has been given. Then, if the processor 11 cannot confirm the event, the processor 11 determines NO and returns to ACT17.

Thus, in ACT17 to ACT18, the processor 11 waits for a situation in which the processor 11 can confirm that the state is the non-detection state, or for an issuance of a stopping instruction.

The processor 11 continues the third guide display and continues the display of the display screen similar to the display screen SCI while in the standby state in ACT17 and ACT18. However, for example, every time the target identifier can be acquired, the processor 11 changes the size of the area inside the circular line LIA included in the image IMK based on the quality of communication with the target tag related to the acquisition of the target identifier. The processor 11 increases the diameter of the line LIA as the communication quality becomes better, for example. As the index of the communication qualities, for example, the RSSI is assumed to be used as described in ACT21.

Thus, in a situation where the target tag remains within the communicable range of the search device 1, the line LIA on the display screen becomes larger as the search device 1 approaches the target tag, and thus the user can recognize the rough estimate of the distance to the target tag.

If the processor 11 can confirm that the non-detection state in the manner similar to that in ACT10 when the processor 11 is in the standby state in ACT17 and ACT18, the processor 11 determines YES in ACT17 and proceeds to ACT19.

In ACT19, similarly to ACT12, the processor 11 increases transmission power of the communication unit 15. The processor 11 then returns to ACT8 and repeats the subsequent steps in the same manner as described above. Thus, the search device 1 ends the third guide display and returns to a state in which guidance is provided by the second guide display.

As described above, the third guide display is performed in a situation where the detection state continues in a state where the transmission power is the upper limit value. Thus, the processor 11 determines that the position of the target tag is within the range of the vicinity of the search device 1, and displays a display screen on the touch panel 17, the display screen showing the moving image MPA acquired by the camera 16, with the image IMG, the text message MEE, and the like, which are images for guidance for bringing the search device 1 close to the target tag, being superimposed on the moving image MPA. Thus, the processor 11 executes information processing based on the search program PRA, and thus the computer having the processor 11 as the central part functions as a determination unit and a display control unit. A function as a display control unit realized by a computer having the processor 11 as a central part and a function as a display unit realized by a conjunction with the touch panel 17 serving as a display device are realized.

If the user determines to stop the search by the search device 1, the user instructs the search device 1 to stop the search by a predetermined operation, such as touching the button BUA. If the processor 11 confirms that the stop instruction is issued in this way, the processor 11 determines YES in ACT11 if the search device 1 is in the standby state in ACT9 to ACT11, and determines YES in ACT18 if the search device 1 is in the standby state in ACT17 and ACT18, and proceeds to ACT20 in both cases.

In ACT20, the processor 11 ends the reading sequence performed by the communication unit 15. Then, the processor 11 ends the search processing.

As described above, the search device 1 determines the relative position of the target tag with respect to the antenna 14 based on the state of the communication between the communication unit 15 and the target tag that is using the antenna 14 having directivity. The search device 1 displays, on the touch panel 17, a screen in which images IMA, IMB, IMC, IMD, IMG, IMH, IMI, IMJ, and IMK and text messages MEA, MEB, MEC, MED, MEE, MEF, MEG, and MEH, which are guidance images for bringing the antenna close to the determined position, are superimposed on an image obtained by the camera 16 with the orientation direction side of the antenna 14 as a photographing range. Thus, guidance for reaching the determined position of the target tag is displayed on the image obtained by capturing the orientation direction of the antenna 14, and the user can easily reach the position of the target tag.

The search device 1 changes the transmission power based on the communication quality with the target tag, thereby prompting the user to efficiently bring the search device 1 close to the target tag, and switching between the first, second and third guidance displays in synchronization with the change in the transmission power. This enables effective guidance display in accordance with the search operation of the search device 1.

The present embodiment can be modified in various ways as follows.

The various screens displayed on the touch panel 17 by the processor 11 in the search processing may be modified as appropriate.

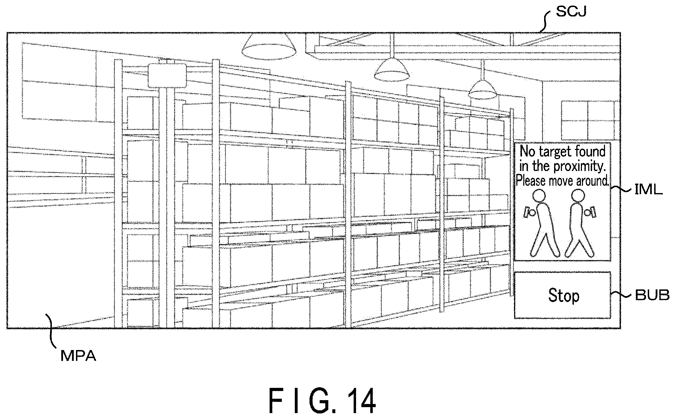

FIG. 14 is a diagram showing a display screen SCJ as another example of the first guide display. The display screen SCJ is a screen on which an image IML and a button BUB are displayed at the right end of the moving image MPA, with the image IML and the button BUB being superimposed on a moving image MPA. The image IML is an image for prompting the user to move the search device 1 while greatly changing the direction of the search device 1. The button BUB is a soft key for the user to instruct the stopping of the search.

The processor 11 may display a screen such as the display screen SCJ in the first guide display, instead of alternately displaying the first guide screen and the second guide screen.

Alternatively, the processor 11 may allow the user to arbitrarily select a plurality of guidance modes, alternately display the first guidance screen and the second guidance screen in the first guidance display when the first mode is selected, and display a screen such as the display screen SCJ in the first guidance display if the second mode is selected. In this case, for example, the first mode is set for an inexperienced user and the second mode is set for an experienced user, and the operation of the search device 1 can be changed according to the proficiency of each user in using the search device 1.

If a plurality of guidance modes are selectable, it is preferable that the display screens in the second guidance display and the third guidance display also be made different according to the guidance mode.

A part of the screens displayed in the above embodiment may not be displayed. For example, the rear range may be divided and incorporated into the left range and the right range, respectively, and the ninth guide screen may not be displayed.

Guidance may be provided by a screen different from the screen displayed in the above embodiment. For example, the processor 11 may display only the images IME and IMF instead of various guide displays in accordance with the designation of the user.

The determination of the position of the target tag may be performed by any method other than the method described in the above embodiment. For example, the guide displays may be switched in accordance with the position determined based on the communication quality, without changing the transmission power.

A part or all of the functions realized by the processor 11 through information processing can be realized by hardware that executes information processing not based on a program, such as a logic circuit. Each of the above-described functions can be realized by a combination of software control and hardware, such as the above-described logic circuit.

The program according to the present embodiment may be transferred in a state of being stored in the electronic apparatus, or may be transferred in a state of not being stored in the electronic apparatus. In the latter case, the program may be transferred via a network or may be transferred in a state of being recorded in a recording medium. The recording medium is a non-transitory tangible medium. The recording medium is a computer-readable medium. The recording medium may be any medium that can store a program and can be read by a computer, such as a CD-ROM or a memory card, and the form of the recording medium is not limited.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the inventions.

## Claims

1. A search device comprising:
an antenna having directivity;
a communication unit that wirelessly communicates with a search-target wireless tag using the antenna;
a determination unit configured to determine a relative position of the wireless tag with respect to the antenna based on a state of communication between the communication unit and the search-target wireless tag;
an imaging unit that obtains an image of an imaging range defined as a direction of orientation of the antenna; and
a display unit configured to display a screen on which a guide image for bringing the antenna close to the position determined by the determination unit is superimposed on the image obtained by the imaging unit.

2. The search device according to claim 1, wherein
the communication unit changes a transmission intensity of the signal for prompting the wireless tag to respond, in accordance with a communication quality with the wireless tag.

3. The search device according to claim 2, wherein
the display unit changes the guide image in accordance with the transmission intensity of the communication unit.

4. The search device according to claim 3, wherein
the display unit changes the guide image depending on whether the transmission intensity of the communication unit is a lower limit value of a predetermined variable range, an upper limit value of the variable range, or an intermediate value excluding the lower limit value and the upper limit value within the variable range.

5. The search device according to any one of claims 1 to 4, wherein
the display unit displays different guidance images depending on which of a plurality of guidance modes is selected, even when the position determined by the determination unit is the same.

6. A program recording medium that records a program for causing a computer that controls a search device including an antenna having directivity, a communication unit that wirelessly communicates with a search target wireless tag using the antenna, and an imaging unit that obtains an image of an imaging range determined as a directivity direction side of the antenna, to function as:
a determination unit configured to determine a relative position of the wireless tag with respect to the antenna based on a state of communication between the communication unit and the search-target wireless tag; and
a display control unit configured to cause a display device to display a screen on which a guide image for bringing the antenna close to the position determined by the determination unit is superimposed on the image obtained by the imaging unit.
